(19) Europäisches Patentamt
European Patent Office
Office européen des brevets

(11) **EP 0 666 190 B1**

(12) **EUROPÄISCHE PATENTSCHRIFT**

(45) Veröffentlichungstag und Bekanntmachung des Hinweises auf die Patenterteilung:
13.08.1997 Patentblatt 1997/33

(51) Int. Cl.$^6$: **B60G 17/015**

(21) Anmeldenummer: 94120056.0

(22) Anmeldetag: 17.12.1994

(54) **Niveauregulierung eines luftgefederten Lastfahrzeugs während eines Be- und Entladebetriebs**

Level control during loading and unloading operations of a load carrying vehicle with pneumatic suspension

Réglage du niveau d'un véhicule utilitaire à suspension pneumatique pendant les opérations de chargement et déchargement

(84) Benannte Vertragsstaaten:
FR GB IT NL SE

(30) Priorität: 04.02.1994 DE 4403467

(43) Veröffentlichungstag der Anmeldung:
09.08.1995 Patentblatt 1995/32

(73) Patentinhaber: MERCEDES-BENZ AG
70327 Stuttgart (DE)

(72) Erfinder:
• Köster, Rolf, Dipl.-Ing.
D-70329 Stuttgart (DE)
• Fischer, Jörg, Dipl.-Ing.
D-73728 Esslingen (DE)

(56) Entgegenhaltungen:
EP-A- 0 372 218          CA-A- 1 102 829
DE-A- 3 708 294          DE-C- 3 810 386
DE-C- 4 217 650          US-A- 3 765 692

• PATENT ABSTRACTS OF JAPAN vol. 006 no. 204 (M-164) ,15.Oktober 1982 & JP-A-57 110521 (TOYO KOGYO KK;OTHERS: 01) 9.Juli 1982,

## Beschreibung

Die Erfindung betrifft ein Verfahren zur Niveauregulierung eines luftgefederten Lastfahrzeugs während eines Be- und Entladebetriebs gemäß dem Oberbegriff des Hauptanspruchs.

Aus der DE 38 10 386 C2 ist eine Bedieneinheit zum Heben und Senken des Aufbaus eines luftgefederten Lastkraftwagen bekannt, mit der ein leichtes Anpassen des Fahrzeugaufbaus an die Höhe einer Laderampe durch eine Bedienperson ermöglicht wird. Wird eine automatische Niveauregulierung eingesetzt, kann das einmal eingestellte Rampenniveau auch während eines Be- oder Entladevorgangs konstant gehalten werden. Niveauveränderung durch den sich verändernden Beladungszustand werden dabei ausgeglichen, indem bei ausreichendem Druckluftvorrat und einer Abweichung vom Sollniveau den Federbälgen Druckluft zu oder abgeführt wird, bis das Sollniveau wieder erreicht ist.

Aus der gattungsbildenden DE 42 17 650 C1 ist weiterhin eine Schaltung zum Bereitschaftsbetrieb bekannt, welche bei abgezogenem Zündschlüssel des Fahrzeugs eine eingeschränkte und auf den Ladebetrieb angepaßte Niveauregulierung vorsieht, wobei die verbleibende Druckluft eines Vorratsbehälter ausgenutzt wird. Diese Schaltung hat insbesondere den Vorteil, daß der Fahrzeugführer sich während des Be- oder Entladevorgangs von dem Fahrzeug entfernen kann, ohne eine Fehlbedienung durch Unkundige fürchten zu müssen, da mit der Schaltung sicherheitskritische Funktionsumfänge der Bedieneinheit, wie die willkürlich aktivierbaren Hebe- und Senkfunktionen, gesperrt werden können.

Für einem Ladevorgang, bei dem ein schweres Hilfsfahrzeug z.B. ein Gabelstapler auf die Ladefläche des Fahrzeugs fährt, um dort Ladung aufzunehmen oder abzugeben, und anschließend das Fahrzeug über die Laderampe wieder verläßt, stellt sich ein besonderes Problem: Nachdem das Hilfsfahrzeug auf die Ladefläche gefahren und der Fahrzeugaufbau eingefedert ist, regelt die Niveauregulierung das Rahmenniveau wieder auf die volle Höhe der Rampe aus. Nachdem dann das Hilfsfahrzeug die Ladefläche wieder verlassen hat und der Fahrzeugaufbau über das Rampenniveau hinaus ausgefedert ist, wird der zuvor in die Luftbälge eingelassene Druckluftanteil zumindest teilweise wieder abgelassen. Diese Ausregelung führt bei jedem Ladezyklus zu einem durch das Gewicht des Hilfsfahrzeugs bedingten Druckverlust. Dieser Druckverlust tritt sowohl bei einem Beladevorgang als auch teilweise kompensiert bei einem Entladevorgang auf. Damit ist der Nutzen einer gattungsgemäßen Schaltung zum Bereitschaftsbetrieb eingeschränkt, da vor Beendigung des Ladevorgangs der Druckluftvorrat erschöpft ist und das Sollniveau nicht mehr ausgeregelt werden kann.

Die Aufgabe der Erfindung besteht darin, ein gattungsgemäßes Verfahren zur Niveauregulierung anzugeben, das besser auf die Verhältnisse beim Be- und Entladen mittels eines Hilfsfahrzeugs abgestimmt ist und einen sparsameren Umgang mit dem Druckluftvorrat ermöglicht.

Die Aufgabe wird erfindungsgemäß durch die kennzeichnenden Merkmale des Patentanspruchs 1 gelöst.

Das erfindungsgemäße Verfahren nutzt den Toleranzbereich aus, der bei Anpassung des Rahmenniveaus an die Rampenhöhe gewährt werden kann. So kann auf die Ausregelung des Ein- bzw. Ausfederweges, der durch das Leergewicht des Hilfsfahrzeugs bedingt ist, verzichtet werden. Das erfindungsgemäße Verfahren setzt diesen Gedanken um, indem abhängig davon, ob das Hilfsfahrzeug sich außerhalb oder auf der Ladefläche befindet ein oberer beziehungsweise ein unterer Sollwert vorgegeben wird. Die beiden Sollwerte weichen geringfügig von dem Rampenniveau ab und differieren im wesentlichen um den durch das Leergewicht des Hilfsfahrzeug bedingten Federweg.

In vorteilhafter Weise wird mit dem erfindungsgemäßen Verfahren über den Zeitraum des gesamten Ladevorganges hinweg die Rahmenhöhe auf die ungefähre Höhe der Laderampe ausgeregelt, wobei die vom Beladungsgrad bedingten langsamen Gewichtsänderungen austariert werden, die durch den Einsatz des Hilfsfahrzeugs bedingten Gewichtsschwankungen aber unberücksichtigt bleiben. Das erfindungsgemäße Verfahren eignet sich gleichermaßen für einen Be- oder einen Entladevorgang und bedarf auch keines externen Eingriffs um von dem einen in den anderen umzuschalten. Natürlich ist das Verfahren auch auf luftgefederte Anhängerfahrzeuge anwendbar.

In einem ersten Ausführungsbeispiel wird ein einmalig vorzugebender auf das Hilfsfahrzeug bezogener Leer-Federweg zugrundegelegt. In einem zweiten Ausführungsbeispiel wird der Leer-Federweg bei jedem Ladezyklus neu aus den gemessenen Ein- oder Ausfederwegen bestimmt, wodurch eine flexible Anpassung an wechselnde Verhältnisse während des Ladevorgangs möglich ist.

Weitere Vorteile und Ausgestaltungen gehen aus den Unteransprüchen und der Beschreibung hervor.

Die Erfindung ist nachstehend anhand einer Zeichnung näher beschrieben, wobei zu dem erfindungsgemäßen Verfahren die

Fig. 1 eine Vorrichtung zur Durchführung des Verfahrens,

Fig. 2a ein Flußdiagramm zu einem ersten Ausführungsbeispiel und

Fig. 2b ein Flußdiagramm zu einem zweiten Ausführungsbeispiel zeigen.

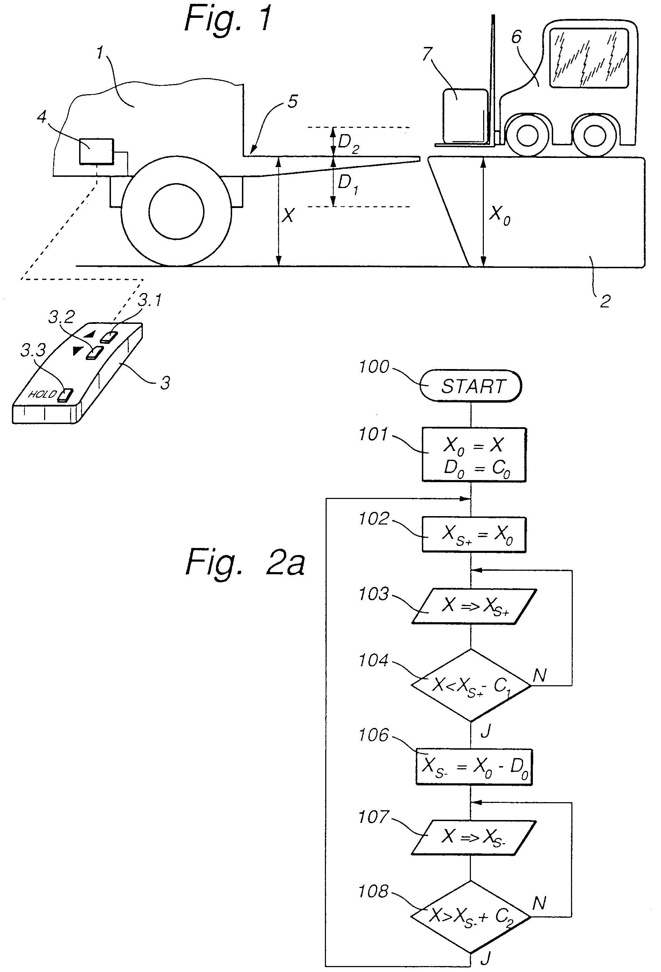

Für einen üblichen Ladevorgang wird das Fahrzeug 1, wie in Fig. 1 dargestellt, an der Laderampe 2 abgestellt und das Rahmenniveau X unter Verwendung der Hebe- und Senkfunktionen 3.1, 3.2 der Bedieneinheit 3 auf die Höhe der Laderampe 2 eingestellt. Die Bedieneinheit 3 wirkt dabei auf die elektronische Niveauregulierung 4, welche in an sich bekannter Weise Drucksteuereinheiten des Luftfedersystems ansteuert (nicht dargestellt). Bei Betätigung einer Taste HOLD 3.3 wird das eingestellte Rampenniveau $X_0$ abgespeichert und ein Bereitschaftsbetrieb (STAND-BY-Betrieb) aktiviert, bei dem die Hauptversorgung des Fahrzeugs 1 abgeschaltet werden und der Fahrer sein Fahrzeug verlassen kann, das Rahmenniveau X aber auf das abgespeicherte Rampenniveau $X_0$ ausgeregelt wird. Ein solcher Bereitschaftsbetrieb ist im wesentlichen aus der gattungsbildenden Schrift bekannt.

Fährt nun ein Hilfsfahrzeug 6, hier ein Gabelstapler, von der Laderampe 2 auf die Ladefläche 5 auf, so federt der Fahrzeugaufbau ein und das Rahmenniveau X senkt sich um den Einfederweg $D_1$. Fährt das Hilfsfahrzeug 6 leer ein, so entspricht der Einfederweg $D_1$ dem Leergewicht des Hilfsfahrzeugs 6. Fährt das Hilfsfahrzeug 6 mit Ladung 7 ein, so ist der Einfederweg $D_1$ größer als der vorgenannte Leer-Einfederweg. Wenn das Hilfsfahrzeug 6 dann nach Ausregelung auf einen Sollwert, in Fig. 1 ist dies $X_0$, das Fahrzeug 1 wieder verläßt, federt der Fahrzeugaufbau aus und das Rahmenniveau hebt sich um den Ausfederweg $D_2$, der für ein unbeladenes Hilfsfahrzeug 6 kleiner ist als für ein beladenes. Ein lineares Antwortverhalten vorrausgesetzt, ist der Leer-Ausfederweg des Hilfsfahrzeug 6 genauso groß wie der Leer-Einfederweg, der entsprechende Wert wird im folgenden mit Leerfederweg $D_0$ bezeichnet.

Anhand des Flußdiagrammes zu dem ersten Ausführungsbeispiel in Fig. 2a wird nachstehend das erfindungsgemäße Verfahren erläutert.

Nach Abstimmung des Rahmenniveaus auf die Rampenhöhe und mit Betätigung der oben erwähnten HOLD-Taste wird der Start 100 eingeleitet.

Im Schritt 101 wird einer Variablen für das Rampenniveau $X_0$ der aktuelle Istwert X des Rahmenniveaus zugewiesen und einer Variablen für den Leerfederweg $D_0$ ein Startwert $C_0$ zugewiesen. Dieser Startwert $C_0$ kann entweder anhand einer Tabelle aus dem von Hand eingegebenen Gewicht des Hilfsfahrzeug zugeordnet oder in einem einmaligen Einlernvorgang für das verwendete Hilfsfahrzeug beispielsweise durch Messung eines Einfederweges bestimmt und abgespeichert werden.

Im darauffolgenden Schritt 102 wird einer Variablen für den oberen Sollwert $X_{S+}$ das Rampenniveau $X_0$ zugewiesen.

Im Schritt 103 wird das Rahmenniveau X auf den vorgegebenen Sollwert $X_{S+}$ ausgeregelt, wobei die Ausregelung solange fortgesetzt wird, bis eine deutliche Absenkung des Rahmenniveaus X erfolgt. Diese Abfrage erfolgt in Schritt 104, indem das Rahmenniveau X den zuletzt vorgegebenen Sollwert $X_{S+}$ abzüglich einer Konstanten $C_1$ unterschreiten muß, damit das Verfahren weitergeführt wird. Die Konstante $C_1$ ist so gewählt, daß die Absenkung beim Übertritt auf die Ladefläche so deutlich sein muß, daß sie nur durch ein hinreichend schweres Hilfsfahrzeug wie ein Gabelstapler und nicht etwa durch einen beladenen Handwagen und Personen verursacht werden kann.

Nach Erkennung einer deutlichen Absenkung des Rahmenniveaus X in Schritt 104, welche anzeigt, daß ein schweres Hilfsfahrzeug auf die Ladefläche gefahren ist, wird in Schritt 106 ein neuer, um den Betrag des Leerfederweges $D_0$ reduzierter Sollwert $X_{S-}$ vorgegeben. Auf diesen unteren Sollwert $X_{S-}$ wird anschließend in Schritt 107 das Rahmenniveau X ausgeregelt.

Die Ausregelung wird solange fortgesetzt, bis eine deutliche Anhebung des Rahmenniveaus X erfolgt. Diese Abfrage erfolgt in Schritt 108, indem das Rahmenniveau X den zuletzt vorgegebenen Sollwert $X_{S-}$ zuzüglich einer Konstanten $C_2$ überschreiten muß, damit das Verfahren weitergeführt wird. Die Konstante $C_2$ ist so gewählt, daß zur Weiterführung des Verfahrens die Anhebung so deutlich sein muß, daß sie nur durch ein hinreichend schweres Hilfsfahrzeug, welches die Ladefläche über die Laderampe verläßt und nicht etwa durch eine Ortsveränderung des Hilfsfahrzeugs auf der Ladefläche ausgelöst werden kann. In einer Weiterbildung kann daher vorgesehen sein, daß die Konstanten $C_1$ und $C_2$ auf das Gewicht des Hilfsfahrzeugs oder $D_0$ bezogen werden.

Nach Erkennung einer deutlichen Anhebung des Rahmenniveaus X in Schritt 108, welche anzeigt, daß das Hilfsfahrzeug die Ladefläche wieder verlassen hat, wird der Verfahrensumlauf durch einen Rücksprung vor Schritt 102 wieder geschlossen. In Schritt 102 wird dann wieder der obere Sollwert $X_{S+}$ vorgegeben, welcher in diesem Ausführungsbeispiel der Rampenhöhe $X_0$ entspricht.

Die angegebenen Werte für den oberen und unteren Sollwert $X_{S+}$, $X_{S-}$ sind nur beispielhaft gewählt. Allgemein brauchen die Sollwerte nicht mit den oben angegeben Werten übereinzustimmen, ihre Differenz voneinander und ihre jeweilige Abweichung von der Rampenhöhe $X_0$ sollten sich jedoch im Rahmen der durch den Leerfederweg $D_0$ gegebenen Größenordnung bewegen. Die Sollwerte ergeben sich aus der Forderung, daß der durch das Gewicht des Hilfsfahrzeug bedingte und sich bei jedem Ladezyklus wiederholender Druckluftverlust minimiert wird.

Für einen Beladevorgang bewirkt das erfindungsgemäße Verfahren mit den angebenen Bemessungen, daß nachdem das Hilfsfahrzeug mit der Ladung auf die Ladefläche gefahren ist, das Rahmenniveau X nicht auf das volle Rampenniveau $X_0$ wieder angehoben wird, sondern lediglich die Einfederung aufgrund der eingefahrenen Ladung durch Zuführung von Druckluft in die Federbälge ausgeglichen wird. Nachdem das Hilfsfahrzeug die Ladung abgegeben hat und die Ladefläche wieder verlassen hat, federt dann das Rahmenniveau X auf ungefähr das Rampenniveau $X_0$ aus. Der insgesamt für einen Beladezyklus aufgewandte Druckluftbedarf beschränkt sich also auf den ladungsbedingten Anteil.

Für einen Entladevorgang bewirkt das angegebene Verfahren, daß nachdem das leere Hilfsfahrzeug auf die Ladefläche gefahren ist, das Rahmenniveau X nicht auf das volle Rampenniveau $X_0$ wieder angehoben wird, sondern die Einfederung ungefähr beibehalten wird, weil der um den Leerfederweg reduzierte neue Sollwert dies zuläßt. Nachdem das Hilfsfahrzeug die Ladung aufgenommen hat und mit dieser die Ladefläche verlassen hat, federt das Rahmenniveau X auf ungefähr das Rampenniveau $X_0$ zuzüglich dem durch die entnommene Ladung bedingten Ausfederweg aus. Dieser ladungsbedingte Ausfederweg wird durch Ablassen von Druckluft aus den Federbälgen zurückgenommen und das Rahmenniveau X auf das Rampenniveau $X_0$ ausgeregelt. Insgesamt wird also keine Druckluft aus dem Vorratsbehälter benötigt, so daß ein Entladevorgang mit einer unbegrenzten Anzahl von Entladezyklen vorgenommen werden kann.

Eine vereinfachten Variante des ersten Ausführungsbeispiels kann dadurch gebildet werden, daß dem unteren Sollwert $X_{S-}$ in Schritt 106 der aktuelle Istwert X des Rahmenniveaus zugewiesen wird, also $X_{S-} = X$. Dies hat zur Folge, daß in Schritt 107 ein Ausgleich sowohl des Leerfederweges $D_0$ als auch eines ladungsbedingten Einfederweges unterdrückt wird, was aufgrund des großen Toleranzbereiches der Anpassung hingenommen werden kann. Der Ausgleich des ladungsbedingten Federweges erfolgt dann erst nachdem das Hilfsfahrzeug die Ladefläche wieder verlassen hat in Schritt 103. Damit findet pro Ladezyklus nur einmal ein Ausgleich statt und zwar nachdem das Hilfsfahrzeug die Ladefläche verlassen hat. Dabei ist das Leergewicht des Hilfsfahrzeugs nicht relevant, weshalb in Schritt 101 die Zuweisung eines Wertes $C_0$ für den Leerfederweges $D_0$ entfällt.

Aus der Beschreibung des ersten Ausführungsbeispiels wird deutlich, daß die gewünschte Reduzierung des Druckluftverbrauches um so besser ausfällt, je besser der Leerfederweg $D_0$ auf das tatsächliche Leergewicht des Hilfsfahrzeugs abgestimmt ist.

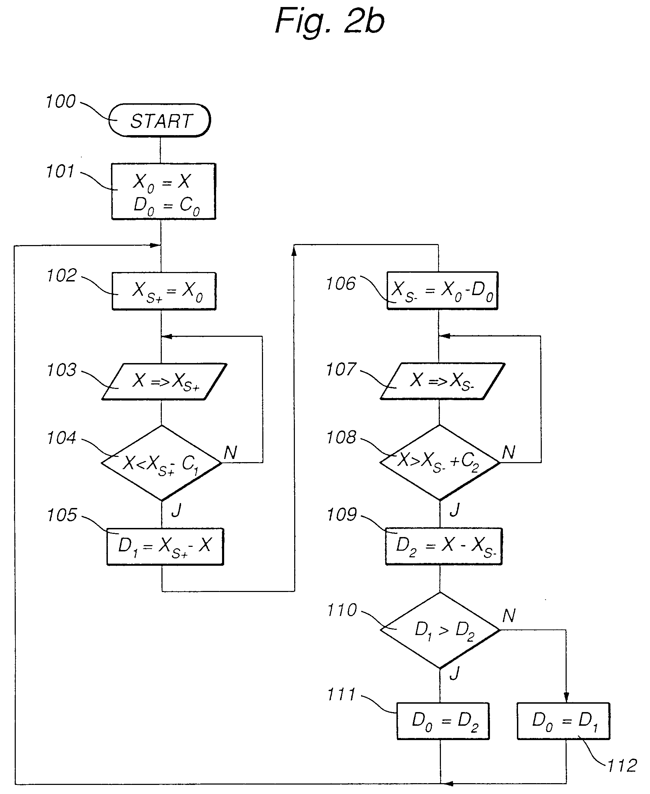

In dem zweiten Ausführungsbeispiel, Fig. 2b, wird eine optimale Anpassung des Leerfederweges $D_0$ an das Leergewicht des Hilfsfahrzeugs dadurch erreicht, daß der Leerfederweg $D_0$ für einen Beladevorgang aus dem Ausfederweg $D_2$ beim Verlassen der Ladefläche und für einen Entladevorgang aus dem Einfederweg $D_1$ beim Übertritt von der Laderampe auf die Ladefläche bestimmt wird.

Der Verfahrensablauf in Fig. 2b entspricht dem Ablauf in Fig. 2a, bis auf daß zusätzlich die Schritte 105 und 109 bis 112 eingefügt wurden. In Schritt 105 wird bei jedem Ladezyklus der Einfederweg $D_1$ bestimmt, indem die Differenz zwischen dem zuletzt vorgegeben Sollwert $X_{S+}$ und dem Istwert X nach Einfederung ermittelt wird. In Schritt 109 wird bei jedem Ladezyklus der Ausfederweg $D_2$ bestimmt, indem der Differenzbetrag zwischen dem zuletzt vorgegeben Sollwert $X_{S-}$ und dem Istwert X nach Ausfederung ermittelt wird. In Schritt 110 wird mittels eines Größenvergleiches des Einfederweges $D_1$ und des Ausfederweges $D_2$ entschieden, ob ein Be- oder ein Entladevorgang vorliegt. Liegt

ein Beladevorgang vor ($D_1>D_2$), so wird in Schritt 111 dem Leerfederweg $D_0$ der Ausfederweg $D_2$ zugewiesen und liegt ein Entladevorgang vor ($D_1<D_2$), so wird in Schritt 112 dem Leerfederweg $D_0$ der Einfederweg $D_2$ zugewiesen. Danach wird wie bei dem ersten Ausführungsbeispiel der Verfahrensumlauf durch einen Rücksprung vor Schritt 102 geschlossen.

Da der Leerfederweg für jeden Ladezyklus aus den Istwerten X ermittelt wird, braucht der Startwert $C_0$ nicht genau bekannt zu sein. So kann beispielsweise ein für Gabelstapler typischer Wert oder auch $C_0 = 0$ eingesetzt werden.

**Patentansprüche**

1. Verfahren zur Niveauregulierung eines luftgefederten Lastfahrzeugs (1) während eines Be- und Entladebetriebs an einer Laderampe (2),

   - bei dem laufend ein Istwert des Rahmenniveaus gemessen und auf einen auf das Rampenniveau bezogenen Sollwert eingeregelt wird,
   - wobei das Rampenniveau zu Beginn des Ladevorgangs ermittelt wird, indem das Rahmenniveau mittels einer Bedieneinheit (3) manuell auf die Höhe der Laderampe abgestimmt und der entsprechende Istwert des Rahmenniveaus als Rampenniveau $X_0$ abgespeichert wird,
   **dadurch gekennzeichnet,**
   daß für einen Ladebetrieb, bei dem ein Hilfsfahrzeug (6) eingesetzt wird, das Rahmenniveau
   - nach Übertritt des Hilfsfahrzeugs (6) von der Laderampe (2) auf die Ladefläche (5) und Einfederung auf ein unteres Rahmenniveau auf einen unteren Sollwert $X_{S-}$ (106) eingeregelt (107) und
   - nach Übertritt des Hilfsfahrzeugs (6) von der Ladefläche (5) auf die Laderampe (2) und Ausfederung auf ein oberes Rahmenniveau auf einen oberen Sollwert $X_{S+}$ (102) eingeregelt (103) wird,
   - wobei die beiden Sollwerte $X_{S+}$, $X_{S-}$ von der Größenordnung des Rampenniveaus $X_0$ sind und die Differenz beider Sollwerte durch einen abgespeicherten Leerfederweg $D_0$ gegeben ist, welcher ungefähr dem durch das Leergewicht des Hilfsfahrzeug bedingten Einfederweg entspricht.

2. Verfahren nach Anspruch 1, **dadurch gekennzeichnet,** daß der Leerfederweg $D_0$ anhand einer Tabelle aus einem zu Beginn des Ladevorgangs manuell eingegebenen Wert für das Gewicht des Hilfsfahrzeugs bestimmt und abgespeichert wird.

3. Verfahren nach Anspruch 1, **dadurch gekenn-**

**zeichnet,** daß der obere Sollwert $X_{S+}$ (102) dem Rampenniveau $X_0$ entspricht und der untere Sollwert $X_{S-}$ (106) dem unmittelbar nach Übertritt des Hilfsfahrzeugs von der Laderampe auf die Ladefläche vorliegenden unteren Rahmenniveau oder dem Rampenniveau $X_0$ abzüglich dem Leerfederweg $D_0$ entspricht.

4. Verfahren nach Anspruch 1, **dadurch gekennzeichnet,** daß für jeden Ladezyklus, bei dem das Hilfsfahrzeug die Ladefläche befährt und wieder verläßt, der Leerfederweg $D_0$ bestimmt (111, 112) und damit und dem Rampenniveau $X_0$ die Sollwerte $X_{S-}$, $X_{S+}$ jedesmal neu festgelegt werden.

5. Verfahren nach Anspruch 1, **dadurch gekennzeichnet,** daß nach Ausregelung auf einen Sollwert der Übertritt des Hilfsfahrzeugs von der Laderampe auf die Ladefläche an einer deutlichen Absenkung (104) des Istwertes X des Rahmenniveaus und der Übertritt des Hilfsfahrzeugs von der Ladefläche auf die Laderampe an einer deutlichen Zunahme (108) des Istwertes X des Rahmenniveaus erkannt wird.

6. Verfahren nach Anspruch 1, **dadurch gekennzeichnet,** daß beim Übertritt des Hilfsfahrzeugs von der Laderampe auf die Ladefläche ein Einfederweg $D_1$ (105) gemessen wird und/oder beim Übertritt des Hilfsfahrzeugs von der Ladefläche auf die Laderampe ein Ausfederweg $D_2$ (109) gemessen wird.

7. Verfahren nach Anspruch 6, **dadurch gekennzeichnet,** daß der Einfederweg $D_1$ (105) und/oder der Ausfederweg $D_2$ (109) aus dem Differenzbetrag zwischen dem vor dem Übertritt zuletzt vorgegebenen Sollwert und dem unmittelbar nach dem Übertritt und Einfederung beziehungsweise Ausfederung vorliegenden Rahmenniveau X bestimmt wird.

8. Verfahren nach Anspruch 6, **dadurch gekennzeichnet,** daß wenn der Einfederweg $D_1$ größer als der Ausfederweg $D_2$ ist, ein Beladevorgang und wenn der Einfederweg $D_1$ kleiner als der Ausfederweg $D_2$ ist, ein Entladevorgang erkannt wird (110).

9. Verfahren nach Anspruch 6 oder 8, **dadurch gekennzeichnet,** daß bei einem Beladevorgang der Leerfederweg $D_0$ des Hilfsfahrzeugs aus dem Ausfederweg $D_2$ bestimmt (111) und bei einem Entladevorgang, der Leerfederweg $D_0$ des Hilfsfahrzeugs aus dem Einfederweg $D_1$ bestimmt (112) wird.

**Claims**

1. A method of regulating the level of an air-sprung load-carrying vehicle (1) during loading and unloading on a loading ramp (2)

- during which an actual value of the chassis level is constantly measured and adjusted to a desired value which is related to the ramp level,
- whereby the ramp level is ascertained at the commencement of the loading process in that the chassis level is by means of an operating unit (3) manually attuned to the height of the loading ramp and the corresponding actual value of the chassis level is stored as ramp level $X_O$,
  characterised in that, for loading during which an auxiliary vehicle (6) is used, and
- once the auxiliary vehicle (6) has moved over from the loading ramp (2) to the loading area (5) and the springs have deflected to a lower chassis level, the chassis level is regulated (107) to a lower desired value ($X_{S-}$) (106), and
- after the auxiliary vehicle (6) has moved over from the loading area (5) to the loading ramp (2) and the springs have deflected to an upper chassis level, the chassis level is regulated (103) to an upper desired value $X_{S+}$ (102)
- whereby the two desired values $X_{S+}$, $X_{S-}$ are of the order of magnitude of the chassis level $X_O$ and the difference between the two desired values is given by a stored idle spring travel $D_O$, which corresponds approximately to the spring deflection path determined by the unladen weight of the auxiliary vehicle.

2. A method according to claim 1, characterised in that the idle spring travel $D_O$ is determined on the basis of a table from a value for the weight of the auxiliary vehicle, input manually at the start of the loading process, and stored.

3. A method according to claim 1, characterised in that the upper desired value $X_{S+}$ (102) corresponds to the ramp level $X_O$ and the lower desired value $X_{S-}$ (106) corresponds to the lower chassis level directly after the auxiliary vehicle has moved from the loading ramp to the loading area or to the ramp level $X_O$ less the idle spring travel $D_O$.

4. A method according to claim 1, characterised in that for each loading cycle in which the auxiliary vehicle travels onto and leaves the loading area again, the idle spring travel $D_O$ is determined (111, 112) and with it and the ramp level $X_O$, the desired values $X_{S-}$, $X_{S+}$ are re-established each time afresh.

5. A method according to claim 1, characterised in that after adjustment to a desired value, the transfer of the auxiliary vehicle from the loading ramp to the loading area is recognised by a clear lowering (104) of the actual value X of the chassis level and the transfer of the auxiliary vehicle from the loading area to the loading ramp is recognisable from a clear increase (108) of the actual value X of the chassis level.

6. A method according to claim 1, characterised in that upon transfer of the auxiliary vehicle from the loading ramp to the loading area, a spring deflection path $D_1$ (105) is measured and/or upon transfer of the auxiliary vehicle from the loading area to the loading ramp, a spring extension path $D_2$ (109) is measured.

7. A method according to claim 6, characterised in that the spring deflection path $D_1$ (105) and/or the spring extension path $D_2$ (109) is determined from the amount of the difference between the desired value most recently input prior to transfer and the chassis level X present directly after the transfer and spring deflection or extension respectively.

8. A method according to claim 6, characterised in that if a spring deflection path $D_1$ is greater than the spring extension path $D_2$, then a loading operation is recognised and if the spring deflection path $D_1$ is less than the spring extension path $D_2$, then an unloading operation is recognised (110).

9. A method according to claim 6 or 8, characterised in that in the case of a loading process the idle spring travel $D_O$ of the auxiliary vehicle is determined from the spring extension path $D_2$ (111) and in the case of an unloading process, the idle spring travel $D_O$ of the auxiliary vehicle is determined from the spring deflection path $D_1$ (112).

**Revendications**

1. Procédé de réglage du niveau d'un véhicule utilitaire (1) à suspension pneumatique pendant une opération de chargement et de déchargement sur une rampe de chargement (2),

   - selon lequel une valeur réelle du niveau du châssis est mesurée en permanence et est réglée sur une valeur de consigne rapportée au niveau de la rampe,
   - selon lequel le niveau de la rampe est déterminé au début de l'opération de chargement par le fait que le niveau du châssis est réglé manuellement à la hauteur de la rampe de chargement à l'aide d'une unité de commande (3) et que la valeur réelle correspondante du niveau du châssis est mémorisée en tant que niveau $X_0$ de la rampe,
   caractérisé en ce que pour une opération de chargement, lors de laquelle on utilise un véhicule auxiliaire (6), le niveau du châssis
   - est réglé (107) à une valeur inférieure de consigne $X_{S-}$ (106) après le transfert du véhicule auxiliaire (6) de la rampe de chargement (2) à la surface de chargement (5) et compression de la suspension jusqu'à un niveau inférieur du châssis, et
   - est réglé (103) à une valeur de consigne supérieure $X_{S+}$ (102) après le transfert du véhicule auxiliaire (6) de la surface de chargement (5) à la rampe de chargement (2) et extension de la suspension jusqu'à un niveau supérieur du châssis,
   - les deux valeurs de consigne $X_{S+}$, $X_{S-}$ étant de l'ordre de grandeur du niveau $X_0$ de la rampe et la différence entre les deux valeurs de consigne étant déterminée par une course de débattement élastique à vide $D_0$ mémorisé et qui correspond approximativement à la course de compression élastique conditionnée par le poids à vide du véhicule auxiliaire.

2. Procédé selon la revendication 1, caractérisé en ce que la course de débattement élastique à vide $D_0$ est déterminée sur la base d'un tableau à partir d'une valeur, introduite manuellement au début de l'opération de chargement, pour le poids du véhicule auxiliaire, et est mémorisée.

3. Procédé selon la revendication 1, caractérisé en ce que la valeur de consigne supérieure $X_{S+}$ (102) correspond au niveau $X_0$ de la rampe et que la valeur de consigne inférieure $X_{S-}$ (106) correspond au niveau inférieur du châssis, présent directement après le transfert du véhicule auxiliaire de la rampe de chargement à la surface de chargement, ou au niveau $X_0$ de la rampe moins la course de débattement élastique à vide ($D_0$).

4. Procédé selon la revendication 1, caractérisé en ce que pour chaque cycle de chargement, lors duquel le véhicule auxiliaire roule sur la surface de chargement et la quitte à nouveau, la course de débattement élastique à vide $D_0$ est déterminée (111, 112) et par conséquent, pour le niveau $X_0$ de la rampe, les valeurs de consigne $X_{S-}$, $X_{S+}$ sont à nouveau fixées chaque fois.

5. Procédé selon la revendication 1, caractérisé en ce qu'après un processus de réglage sur une valeur de consigne, le transfert du véhicule auxiliaire de la rampe de chargement à la surface de chargement est identifié sur la base d'une réduction nette (104) de la valeur réelle X du niveau du châssis et le transfert du véhicule auxiliaire depuis la surface de chargement à la rampe de chargement est identifié sur la base d'un accroissement net (108) de la valeur réelle X du niveau du châssis.

6. Procédé selon la revendication 1, caractérisé en ce qu'une course de compression élastique $D_1$ (105)

est mesurée lors du transfert du véhicule auxiliaire de la rampe de chargement à la surface de chargement et/ou qu'une course d'extension élastique $D_2$ (109) est mesurée lors du transfert du véhicule auxiliaire depuis la surface de chargement à la rampe de chargement.

7. Procédé selon la revendication 6, caractérisé en ce que la course de compression élastique $D_1$ (105) et/ou la course d'extension élastique $D_2$ (109) est déterminée à partir de la valeur absolue de la différence entre la valeur de consigne prédéterminée en dernier lieu avant le transfert et le niveau X du châssis présent aussitôt après le transfert et la compression ou extension élastique, respectivement.

8. Procédé selon la revendication 6, caractérisé par l'identification (110) d'une opération de chargement lorsque la course de compression élastique $D_1$ est supérieure à la course d'extension élastique $D_2$ et d'une opération de déchargement lorsque la course de compression élastique $D_1$ est inférieure à la course d'extension élastique $D_2$.

9. Procédé selon la revendication 6 ou 8, caractérisé en ce que dans le cas d'une opération de chargement, la course de débattement élastique à vide $D_0$ du véhicule auxiliaire est déterminée (111) à partir de la course de déploiement élastique $D_2$ et, dans le cas d'une opération de déchargement, la course d'extension élastique à vide $D_0$ du véhicule auxiliaire est déterminée (112) à partir de la course de compression élastique $D_1$.

# Fig. 1

# Fig. 2a

$$X_0 = X$$
$$D_0 = C_0$$

$$X_{S+} = X_0$$

$$X \Rightarrow X_{S+}$$

$$X < X_{S+} - C_1$$

$$X_{S-} = X_0 - D_0$$

$$X \Rightarrow X_{S-}$$

$$X > X_{S-} + C_2$$

# Fig. 2b